(19) Europäisches Patentamt
European Patent Office
Office européen des brevets

(11) Veröffentlichungsnummer : **0 384 264 B1**

(12) # EUROPÄISCHE PATENTSCHRIFT

(45) Veröffentlichungstag der Patentschrift : **31.03.93 Patentblatt 93/13**

(51) Int. Cl.$^5$ : **C08F 210/06,** C08F 4/602

(21) Anmeldenummer : **90102762.3**

(22) Anmeldetag : **13.02.90**

(54) **Polypropylenwachs und Verfahren zu seiner Herstellung.**

(30) Priorität : **15.02.89 DE 3904468**

(43) Veröffentlichungstag der Anmeldung : **29.08.90 Patentblatt 90/35**

(45) Bekanntmachung des Hinweises auf die Patenterteilung : **31.03.93 Patentblatt 93/13**

(84) Benannte Vertragsstaaten : **BE DE ES FR GB IT NL**

(56) Entgegenhaltungen :
**EP-A- 0 284 707**
**DE-A- 3 148 229**
**PATENT ABSTRACTS OF JAPAN, Band 11, Nr. 357 (C-458)[2804], 20. November 1987**

(73) Patentinhaber : **HOECHST AKTIENGESELLSCHAFT**
**Postfach 80 03 20**
**W-6230 Frankfurt am Main 80 (DE)**

(72) Erfinder : **Winter, Andreas, Dr.**
**Gundelhardtstrasse 2**
**W-6233 Kelkheim (Taunus) (DE)**
Erfinder : **Dolle, Volker, Dr.**
**Hattersheimer Strasse 15**
**W-6233 Kelkheim (Taunus) (DE)**
Erfinder : **Rohrmann, Jürgen, Dr.**
**Die Ritterwiesen 10**
**W-6237 Liederbach (DE)**
Erfinder : **Antberg, Martin, Dr.**
**Sachsenring 10**
**W-6238 Hofheim am Taunus (DE)**
Erfinder : **Böhm, Ludwig, Dr.**
**Leonhardstrasse 36**
**W-6234 Hattersheim am Main (DE)**
Erfinder : **Spaleck, Walter, Dr.**
**Sulzbacher Strasse 63**
**W-6237 Liederbach (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Polypropylenwachs, dessen Polymerketten von hoher Einheitlichkeit bezüglich Kettenlänge und Kettenaufbau sind.

Die Herstellung von isotaktischen Polyolefinwachsen (Isotakt. Index 80 bis 85 %, Schmelzenthalpie 63 J/g, Mischungen aus ataktischen und isotaktischen Polyolefinketten) mittels Trägerkatalysator, Cokatalysator und Stereoregulator bei Temperaturen von über 95 °C ist bekannt (vgl. DE-A 31 48 229). Als Molmassenregler müssen große Mengen Wasserstoff eingesetzt werden.

Ferner ist auch ein $MgCl_2$-Trägerkontakt bekannt, der zu kristallinen PP-Wachsen mit enger Molmassenverteilung führt (vgl. JP 59/206 409). Auch dieser Katalysator weist die typischen Nachteile von Katalysatorsystemen auf, die für die Herstellung hochmolekularer Polyolefine entwickelt wurden und somit bei der Herstellung niedermolekularer Polyolefine eine geringe Aktivität besitzen. Ferner ist auch hier im Wachsprodukt eine unerwünschte Mischung aus isotaktischen und ataktischen Ketten vorhanden.

Weiterhin sind wachsartige statistische Ethylen-Copolymere mit einem $\alpha$-Olefinanteil von 1 - 15 mol% bekannt, welche unter Verwendung eines Katalysatorsystems auf Basis Zirkonhydrid-Metallocen/Aluminoxan hergestellt werden (vgl. JP 62/129 303). Solche Metallocene eignen sich jedoch nicht zur Erzeugung von isotaktischem Polypropylen; außerdem ist ihre Aktivität bei der Propylen-Polymerisation sehr gering.

Bedingt durch die geringen Katalysatoraktivitäten unter den notwendigen Reaktionsbedingungen werden in den Polymerwachsen relativ hohe Chlorgehalte von teilweise über 1000 ppm gefunden, sofern die Katalysatorrückstände nicht durch eine aufwendige spezielle Nachbehandlung entfernt werden.

Es ist auch die Verwendung von Metallocen/Aluminoxan Katalysatorsysteme für die Herstellung hochisotaktischer 1-Olefinpolymerwachse vorgeschlagen worden (vgl.DE 3 743 321).

Die Nachteile der vorstehend beschriebenen Verfahren konnte mit diesem Katalysator überwunden werde, die hohe Isotaktizität der Produkte führte jedoch zu einer extrem hohen Härte der Wachse, was für eine Reihe von Wachsanwendungen unerwünscht ist.

Eine prinzipielle Möglichkeit zur Reduzierung der Härte besteht in nachträglichem Zumischen von ataktischem Poly-1-Olefinwachs. Abgesehen von den großtechnisch nicht vertretbaren unwirtschaftlich hohen Kosten, führt dieses Zumischen zu uneinheitlichen und klebrigen Produkten.

Es bestend somit die Aufgabe, ein Verfahren zu finden, mit welchem unter Verwendung von Metallocen/Aluminoxan-Katalysatoren Polyolefinwachse mit niedrigerer Härte hergestellt werden können.

Es wurde gefunden, daß die Aufgabe durch Copolymerisation von Propylen mit anderen Olefinen in Gegenwart bestimmter Metallocen-Katalysatoren gelöst werden kann.

Die Erfindung betrifft somit ein Polypropylenwachs, bestehend aus 80 bis 99,75 Gew.-%, bezogen auf das Gesamtpolymer, Propyleneinheiten und 0,25 bis 20 Gew.-%, bezogen auf das Gesamtpolymer, aus Einheiten, die sich von Ethylen oder einem Olefin mit mindestens 4 C-Atomen der Formel $R^{15}$-CH=CH-$R^{16}$ ableiten, worin $R^{15}$ und $R^{16}$ gleich oder verschieden sind und ein Wasserstoffatom oder einen Alkylrest mit 1 bis 28 C-Atomen bedeuten oder $R^{15}$ und $R^{16}$ mit den sie verbindenden C-Atomen einen Ring mit 4 bis 28 C-Atomen bilden, mit einer Molmasse $M_w$ von 1000 bis 50000 g/mol, einer Polydispersität $M_w/M_n$ von 1,8 bis 5,0, einer Viskositätszahl von 2 bis 60 $cm^3/g$, einem Schmelzpunkt von 50 bis 150 °C, einer Schmelzenthalpie $\Delta H$ kleiner 100 J/g, einem Tropfpunkt von 60 bis 160 °C, einer Schmelzviskosität bei 170 °C von 100 bis 20000 mPa·s und einer regelmäßigen Verteilung der Comonomereinheiten in der Polymerkette, wobei die mittlere Blocklänge n kleiner als 1,25 ist.

Weiterhin betrifft die Erfindung ein Verfahren zur Herstellung des Polypropylenwachses gemäß Anspruch 1 durch Polymerisation von 70 bis 99,9 Gew.-%, bezogen auf die Gesamtmenge der Monomeren, Propylen und 0,1 bis 30 Gew.%, bezogen auf die Gesamtmenge der Monomeren, mindestens eines Vertreters der Gruppe Ethylen und Olefine mit mindestens 4 C-Atomen der Formel $R^{15}$-CH=CH-$R^{16}$, worin $R^{15}$ und $R^{16}$ die in Anspruch 1 genannte Bedeutung haben, bei einer Temperatur von -60°C bis 100 °C, bei einem Druck von 0,5 bis 120 bar, in Lösung, in Suspension oder in der Gasphase, in Gegenwart von Wasserstoff als Molmassenregler und eines Katalysators, welcher aus einem Metallocen und einem Aluminoxan besteht, dadurch gekennzeichnet, daß der Wasserstoffpartialdurck 0,05 bis 50 bar und das Molverhältnis Olefin zu Wasserstoff 3 bis 3000:1 beträgt und daß das Metallocen eine Verbindung der Formel I

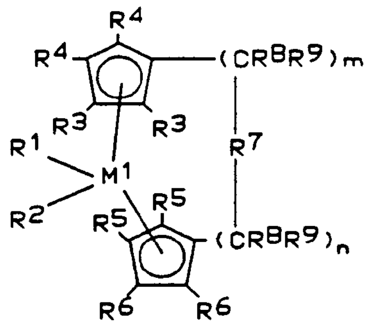

(I)

ist, worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$,$R^4$, $R^5$ und $R^6$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, einen $-NR^{10}_2$-, $-SR^{10}$-, $-OSiR^{10}_3$-, $-SiR^{10}_3$-, oder $-PR^{10}_2$- Rest bedeuten, worin $R^{10}$ eine $C_1$-$C_{10}$-Alkylgruppe, eine $C_6$-$C_{10}$-Arylgruppe oder im Falle von Si oder P enthaltenden Resten auch ein Halogenatom ist, oder je zwei benachbarte Reste $R^3$, $R^4$, $R^5$ oder $R^6$ mit den sie verbindenden C-Atomen einen Ring bilden,

$R^7$

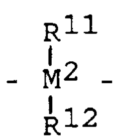 , 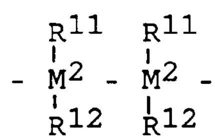 , 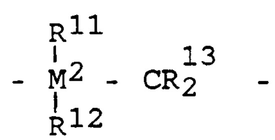 , 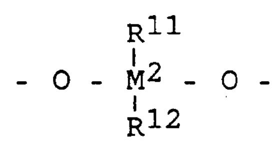

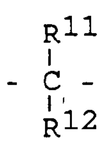 , 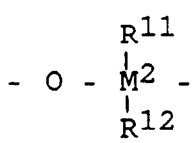 , 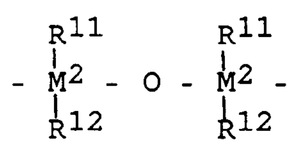 ,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{30}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben,

m und n gleich oder verschieden sind und null, 1 oder 2 sind, wobei m plus n null, 1 oder 2 ist,

und das Aluminoxan eine Verbindung der Formel (II)

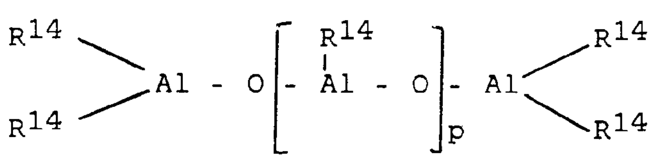

(II)

für den linearen Typ und/oder der Formel (III)

$$-\left[\begin{matrix}R^{14}\\ |\\ Al - O\end{matrix}\right]_{p+2}- \qquad (III)$$

für den cyclischen Typ ist, wobei in den Formeln (II) und (III) $R^{14}$ eine $C_1$-$C_6$-Alkylgruppe bedeutet und p eine ganze Zahl von 2 bis 50 ist, bedeutet.

Das erfindungsgemäße Polypropylenwachs besteht zu 80 bis 99,75, vorzugsweise 90 bis 99,5 Gew.-%, bezogen auf das Gesamtpolymer, aus Propyleneinheiten und zu 0,25 bis 20, vorzugsweise 0,5 bis 15 Gew.-%, bezogen auf das Gesamtpolymer, aus Einheiten, die sich von Ethylen oder einem Olefin mit mindestens 4 C-Atomen der Formel $R^{15}$-CH=CH-$R^{16}$ ableiten. In dieser Formel sind $R^{15}$ und $R^{16}$ gleich oder verschieden und bedeuten ein Wasserstoffatom oder einen Alkylrest mit 1 bis 28 C-Atomen. $R^{15}$ und $R^{16}$ können jedoch auch mit den sie verbindenden C-Atomen einen Ring mit 4 bis 28 C-Atomen bilden. Beispiele für solche Olefine sind 1-Buten, 1-Hexen-, 4-Methyl-1-penten, 1-Penten, 1-Octen, Norbornen, Norbornadien, 6-Penten, Cyclohexen pder Cycloocten.

Bevorzugte Copolymerwachse sind Propylen/Ethylen-, Propylen/1-Hexen-, Propylen/1-Buten- und Propylen/4-Methyl-1-penten-Polymere.

Copolymerwachse aus drei verschiedenen Monomeren sind bevorzugt Propylen/Ethylen/1-Hexen- und Propylen/Ethylen/1-Buten-Terpolymerwachse.

Das erfindungemäße Copolymerwachs besitzt eine Molmasse $M_w$ von 1000 bis 50000 g/mol, bevorzugt 8000 bis 45000g/mol, eine Polydispersität $M_w/M_n$ von 1,8 bis 5,0, bevorzugt 2,0 bis 4,0, eine Viskositätszahl von 2 bis 60 $cm^3/g$, bevorzugt 10 bis 50 $cm^3/g$, einem Schmelzpunkt von 50 bis 150 °C, bevorzugt 70 bis 140 °C, eine Schmelzenthalpie $\Delta H$ kleiner 100 J/g, einen Tropfpunkt von 60 bis 160 °C, bevorzugt 80 bis 150 °C, eine Schmelzviskosität von 100 bis 20000 mPa·s, bevorzugt 120 bis 7000 mPa·s bei 170 °C und eine regelmäßige Verteilung der Comonomereinheiten in der Polymerkette, wobei die mittlere Comonomeren-Blocklänge n kleiner als 1,25, bevorzugt kleiner als 1,2 ist.

Der für das erfindungsgemäße Verfahren zu verwendende Katalysator besteht aus einem Aluminoxan und einem Metallocen der Formel I.

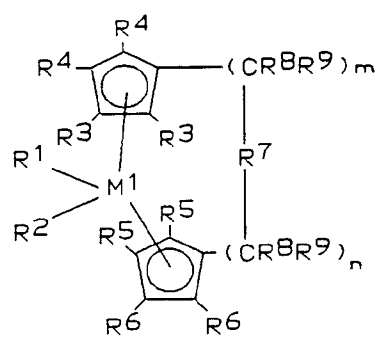

(I).

In Formel I ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon und Hafnium.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$, $R^4$, $R^5$ und $R^6$ sind gleich oder verschieden und bedeuten ein Wasserstoffatom, ein Halogenatom, vorzugsweise ein Fluor-, Chlor- oder Bromatom, eine $C_1$-$C_{10}$-, vorzugsweise $C_1$-$C_3$-Alkylgruppen, eine $C_6$-$C_{10}$-, vorzugsweise $C_6$-$C_8$-Arylgruppe, eine $C_1$-$C_{10}$-, vorzugsweise $C_1$-$C_3$-Alkoxygruppe, einen -$NR^{10}_2$-, -$SiR^{10}$-, -$OSiR^{10}_3$-, -$SR^{10}_3$-, oder -$PR^{10}_2$-Rest, worin $R^{10}$

eine $C_1$-$C_{10}$-, vorzugsweise $C_1$-$C_3$-Alkylgruppe oder $C_6$-$C_{10}$-, vorzugsweise $C_6$-$C_8$-Arylgruppe, oder im Falle Si oder P enthaltender Reste auch ein Halogenatom, vorzugsweise Chloratom, ist, oder je zwei benachbarte Reste $R^3$, $R^4$, $R^5$ oder $R^6$ bilden mit den sie verbindenden C-Atomen einen Ring. Besonders bevorzugte Liganden sind Indenyl, Fluorenyl und Cyclopentadienyl.

$R^7$ ist

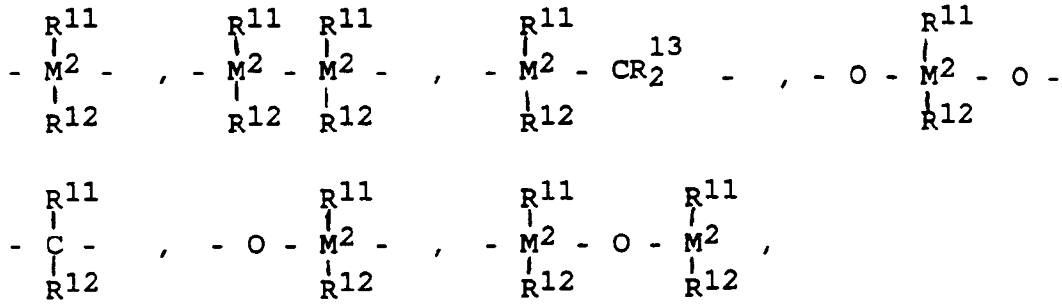

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{30}$, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$ , vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^2$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Die vorstehend beschriebenen Metallocene können nach folgendem allgemeinen Reaktionsschema hergestellt werden:

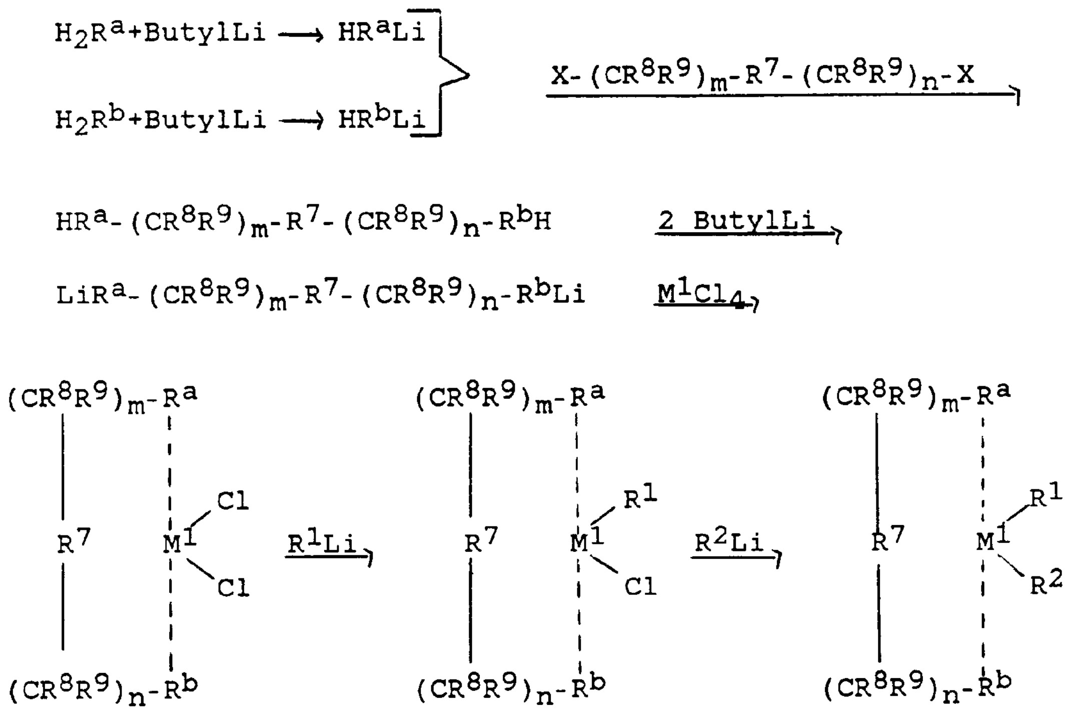


(X = Cl, Br, J, O-Tosyl, $HR^a$ = 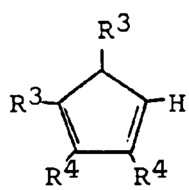 , $HR^b$ = 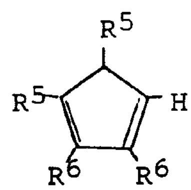

Bevorzugt eingesetzte Metallocenverbindungen sind Dialkylsilylbisindenylzirkondichlorid, Alkylalkylenbisindenylzirkondichlorid, Alkylenbisindenylzirkondichlorid, Diarylalkylenbisindenylzirkondichlorid, Alkylenbisindenylhafniumdichlorid, Diarylsilylbisindenylzirkondichlorid, (Aryl)(alkyl)bisindenylzirkondichlorid, Dialkylgermylbisindenylzirkondichlorid, (Alkyl)(Alkenyl)silylbisindenylzirkondichlorid und (Aryl)(Alkenyl)silylbisindenylzirkondichlorid.

Besonders bevorzugt sind dabei: Dimethylsilylbisindenyizirkondichlorid, Ethylenbisindenylzirkondichlorid, Diphenylsilylbisindenylzirkondichlorid, Dimethylgermylbisindenylzirkondichlorid, (Phenyl)(Vinyl)silylbisindenylzirkondichlorid und Ethylenbisindenylhafniumdichlorid.

Der Cokatalysator ist ein Aluminoxan der Formel II

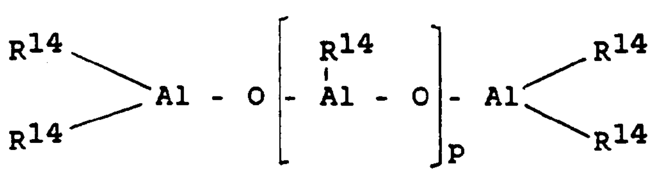 (II)

für den linearen Typ und/oder der Formel (III)

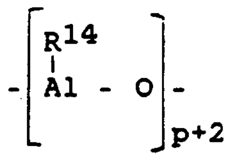

(III)

für den cyclischen Typ. In diesen Formeln bedeuten $R^{14}$ eine $C_1$-$C_6$-Alkylgruppe, vorzugsweise Methyl, Ethyl oder Isobutyl, insbesondere Methyl, und p eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 -vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.

Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Die Polymerisation wird in bekannter Weise in Lösung, in Suspension oder in der Gasphase, kontinuierlich oder diskontinuierlich, ein- oder mehrstufig bei einer Temperatur von -60 bis 150 °C, vorzugsweise 0 bis 80 °C, durchgeführt. Polymerisiert werden Propylen und als Comonomer mindestens ein Vertreter der Gruppe, die aus Ethylen und Olefinen mit mindestens 4 C-Atomen der Formel $R^{15}$-CH=CH-$R^{16}$ besteht. In dieser Formel haben $R^{15}$ und $R^{16}$ die schon genannte Bedeutung. Eingesetzt werden 70 bis 99,9, vorzugsweise 80 bis 99,7 Gew.-%, bezogen auf die Gesamtmenge der Monomeren, Propylen und 0,1 bis 30, vorzugsweise 0,3 bis 20 Gew.-%, bezogen auf die Gesamtmenge der Monomeren, von mindestens einem Comonomer.

Als Molmassenregler wird Wasserstoff zugegeben, wobei der Wasserstoffpartialdruck im Bereich von 0,05 bis 50 bar, vorzugsweise 0,1 bis 25 bar, insbesondere 0,2 bis 10 bar liegt. Das Molverhältnis der Olefine zu Wasserstoff beträgt 3 bis 3000, vorzugsweise 6 bis 1500, insbesondere 15 bis 300.

Der Gesamtdruck im Polymerisationssystem beträgt 0,5 bis 120 bar. Bevorzugt ist die Polymerisation in dem technisch besonders interessanten Druckbereich von 5 bis 64 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Wird nur ein Monomer als Suspensionsmittel verwendet, so wird das Comonomere, beziehungsweise werden die Comonomeren gasförmig oder flüssig zudosiert.

Des weiteren ist es möglich, in einer Mischung verschiedener Monomeren als Suspensionsmittel zu polymerisieren; ein weiteres Monomeres kann dann flüssig oder gasförmig zudosiert werden.

Die Dauer der Polymerisation ist beliebig, da das erfindungsgemäß zu verwendende Katalysatorsystem einen nur geringen zeitabhängigen Abfall der Polymerisationsaktivität zeigt.

Durch das erfindungemäße Verfahren werden chemisch hoch einheitliche Copolymerwachse herstellbar.

Generell sind die Kettenenden aus gesättigten Kohlenwasserstoffgruppen aufgebaut. Die Polydispersität $M_w/M_n$ ist mit typischen Werten von 2,0 - 3,0 extrem eng. Das Comonomer beziehungsweise die Comonomeren werden nahezu auschließlich einzeln zwischen Polypropylenblöcke eingebaut, was zu einer optimalen Reduktion der Kristallinität und Härte der Copolymerwachse führt. Damit verbunden ist eine Senkung von Schmelz- und Kristallisationsenthalpie sowie von Schmelzpunkt und Kristallisationspunkt. Entsprechend dem Verfahren können diese Parameter und darüber hinaus die Schmelzviskosität durch Variation der Wasserstoffmenge und durch Variation der Comonomeren über einen weiten Bereich exakt gesteuert werden. Mit dem erfindungsgemäßen Verfahren können darüber hinaus auch farblose, hochtransparente Wachse hergestellt werden. Die erfindungsgemäß herstellbaren Polymerpulver bestehen aus nichtklebenden kompakten kugelförmigen Teilchen mit enger Korngrößenverteilung und hoher Schüttdichte. Das Wachspulver zeichnet sich durch eine sehr gute Rieselfähigkeit aus und läßt sich somit optimal handhaben.

Die Katalysatoraktivitäten sind sehr hoch, was bei hohen Raum-Zeit-Ausbeuten niedrige Katalysatorrestgehalte im Polymeren bedeutet.

Die nachfolgenden Beispiele sollen die Erfindung näher erläutern.

Es bedeuten

VZ= Viskositätszahl in $cm^3/g$

$M_w$= Molmassengewichtsmittel
$M_n$= Molmassenzahlenmittel
$M_w/M_n$= Polydispersität
} ermittelt durch Gelpermeationschromatographie (Zahlenangaben in g/mol)

SV= Schmelzviskosität, ermittelt mittels Rotationsviskosimeter bei 170 °C

SD= Schüttdichte des Polymerpulvers in $g/dm^3$

| | | | |
|---|---|---|---|
| $n_{PP}$= | mittlere | Blocklänge | Polypropylen |
| $n_{PE}$= | " | " | Polyethylen |
| $n_{PH}$= | " | " | Polyhexen |
| $n_{PB}$= | " | " | Polybuten |
| $n_{PMP}$= | " | " | Poly-4-methyl-1-penten |

(die Blocklängen wurden mittels $^{13}$C-NMR-Spektroskopie bestimmt)

Schmelzpunkte, Kristallisationspunkte, deren Halbwertsbreiten, die Schmelz- und Kristallisationsenthalpien sowie die Glastemperaturen (Tg) wurden durch DSC-Messungen (20 °C/min Aufheiz-/Abkühlgeschwindigkeit) bestimmt.

**Beispiele 1-16**

Ein trockener 16 dm$^3$-Kessel wurde mit Stickstoff gespült und mit 40 Ndm$^3$ (entsprechend 2,5 bar) Wasserstoff sowie mit 10 dm$^3$ flüssigem Propylen befüllt. Dann wurden 30 cm$^3$ toluolische Methylaluminoxanlösung (entsprechend 40 mmol Al, mittlerer Oligomerisierungsgrad des Methylaluminoxans n=20) sowie 25 Gew.-% der gewünschten Gesamtmenge an Ethylen (Mengen siehe Tabelle 1) zugegeben und der Ansatz bei 30 °C 15 Minuten gerührt.

Parallel dazu wurde die aus Tabelle 1 ersichtliche Menge des Zirkonocens Dimethylsilylbisindenylzirkondichlorid in 15 cm$^3$ toluolischer Methylaluminoxanlösung (20 mmol Al) gelöst und durch 15 minütiges Stehenlassen voraktiviert. Die orangerote Lösung wurde dann in den Kessel gegeben. Das Polymerisationssystem wurde auf die in Tabelle 1 ersichtliche Polymerisationstemperatur gebracht und durch entsprechende Kühlung während der Polymerisationszeit (Tabelle 1) bei dieser Temperatur gehalten. Die restliche Ethylenmenge wurde gleichmäßig während der Polymerisationszeit zudosiert.

Produktmengen, Metallocenaktivitäten sowie der Ethylengehalt der hergestellten Polymeren sind in der Tabelle 1 zusammengefaßt. Die Produkteigenschaften sind der Tabelle 2 zu entnehmen.

**Beispiele 17-19**

Es wurde analog zu den Beispielen 1-16 verfahren, jedoch wurde die als Molmassenregler verwendete Wasserstoffmenge variiert. Statt 40 Ndm$^3$ wurden die in Tabelle 3 angegebenen Mengen eindosiert. Die Bedingungen der Polymerisation sind der Tabelle 3, die Produkteigenschaften der Tabelle 4 zu entnehmen.

**Beispiele 20-24**

Es wurde analog zu den Beispielen 1-16 verfahren, jedoch wurden an Stelle von Dimethylsilylbisindenylzirkondichlorid die Metallocene Ethylenbisindenylzirkondichlorid (Beispiel 20), Diphenylsilylbisindenylzirkondichlorid (Beispiel 21), Dimethylgermylbisindenylzirkondichlorid (Beispiel 22), Ethylenbisindenylhafniumdichlorid (Beispiel 23) und (Vinyl) (Phenyl)silylbisindenylzirkondichlorid (Beispiel 24) verwendet. Die Bedingungen der Polymerisation sind der Tabelle 5, die Produkteigenschaften der Tabelle 6 zu entnehmen.

**Beispiele 25-27**

Es wurde analog zu den Beispielen 1-16 verfahren, jedoch wurden an Stelle des Comonomeren Ethylen die Comonomeren 1-Hexen (Beispiel 25), 1-Buten (Beispiel 26) und 4-Methyl-1-penten (Beispiel 27) verwendet. Die Bedingungen der Polymerisation sind der Tabelle 7, die Produkteigenschaften der Tabelle 8 zu entnehmen.

**Beispiel 28**

Ein trockener 16 dm$^3$-Kessel wurde mit Stickstoff gespült und mit 10 dm$^3$ flüssigem Propylen befüllt. Dann wurden 30 cm$^3$ toluolische Methylaluminoxanlösung (entsprechend 40 mmol Al, mittlerer Oligomerisierungsgrad des Methylaluminoxans n=20) zugegeben und der Ansatz 15 Minuten gerührt.

Parallel dazu wurden 8,5 mg (0,019 mmol) Dimethylsilylbisindenylzirkondichlorid in 15 cm$^3$ toluolischer Methylaluminoxanlösung (20 mmol Al) gelöst. Nach 15 Minuten wurde die orangerote Lösung in den Kessel

gegeben. Das Polymerisationssystem wurde auf 50 °C gebracht und danach wurden kontinuierlich 85 g Ethylen während der 60-minütigen Polymerisationszeit zudosiert.
Es wurden 1,1 kg Polymerpulver entsprechend einer Metallocenaktivität von 129,4 kg Polymer/g Kat x h erhalten.
Der Ethyleneinbau betrug 7,1 Gew.-%.
Blocklänge $n_{PP}$= 9,2, $n_{PE}$= 1,05, VZ= 39 $cm^3$/g; $M_w$= 24750, $M_n$= 9850, $M_w/M_n$= 2,5; SD= 330 g/$dm^3$; SV= 1350 mPa·s; Tropfpunkt 128 °C; Schmelzpunkt 108 °C, Kristallisationspunkt 69 °C, Glastemperatur -24 °C, Schmelzenthalpie 52,8 J/g, Kristallisationsenthalpie -40,1J/g.

**Vergleichbeispiel A**

Ein trockener 16 $dm^3$-Kessel wurde mit Stickstoff gespült und mit 40 $Ndm^3$ (entsprechend 2,5 bar) Wasserstoff, mit 10 $dm^3$ flüssigem Propylen und mit 140 g Ethylen befüllt. Dann wurden 30 $cm^3$ toluolische Methylaluminoxanlösung (entsprechend 40 mmol Al, mittlerer Oligomerisierungsgrad des Aluminoxans n=20) zugegeben und der Ansatz 15 Minuten gerührt.
Parallel dazu wurden 8,5 mg (0,019 mmol) Dimethylsilylbisindenylzirkondichlorid in 15 $cm^3$ toluolischer Methylaluminoxanlösung (20 mmol Al) gelöst. Nach 15 Minuten wurde die orangerote Lösung in den Kessel gegeben. Polymerisiert wurde 60 Minuten bei 50 °C. 2,0 kg Polymerpulver wurden erhalten, entsprechend einer Metallocenaktivität von 235,3 kg Polymer/g Kat x h. Der Ethyleneinbau betrug 6,8 Gew,-%. VZ= 38 $cm^3$/g, $M_w$= 24950, $M_n$= 10150, $M_w/M_n$= 2,5, SD 310 g/$dm^3$, SV= 1220 mPa·s; Tropfpunkt 141 °C; Schmelzpunkt 128 °C, Kristallisationspunkt 91 °C, Glastemperatur -32 °C, Schmelzenthalpie 63,5 J/g, Kristallisationsenthalpie -50,7 J/g.

Die Vorlage der gesamten Comonomermengen führt zu einem deutlich anderen Produkt, als dem, das erhalten wird durch Vorlage von 25 % der Gesamtmonomermenge und kontinuierlicher Zudosierung der restlichen Comonomermengen während der Polymerisation (Beispiele 8 und 9) oder erhalten wird durch ausschließliche Zudosierung des Comonomeren während der Polymerisation (Beispiel 28). Tropfpunkt, Schmelzpunkt, Kristallisationspunkt, Schmelzenthalpie sowie Kristallisationsenthalpie liegen deutlich höher. Laut $^{13}$C-NMR wird ein Produkt mit größerer mittlerer Blocklänge $n_{PE}$ erhalten.

**Beispiel 29**

Ein trockener 16 $dm^3$-Kessel wurde mit Stickstoff gespült und mit 40 $Ndm^3$ (entsprechend 2,5 bar) Wasserstoff, mit 10 $dm^3$ flüssigem Propylen, mit 300 g 1-Hexen und 17,5 g Ethylen befüllt. Dann wurden 30 $cm^3$ toluolische Methylaluminoxanlösung (entsprechend 40 mmol Al, mittlerer Oligomerisierungsgrad n=20) zugegeben und der Ansatz 15 Minuten gerührt.
Parallel dazu wurden 8,5 mg (0,019 mmol) Dimethylsilylbisindenylzirkondichlorid in 15 $cm^3$ toluolischer Methylaluminoxanlösung (20 mmol Al) gelöst. Nach 15 Minuten wurde die orangerote Lösunge in den Kessel gegeben. Polymerisiert wurde 60 Minuten bei 60 °C, während 52,5 g Ethylen kontinuierlich zudosiert wurden. Es wurden 2,1 kg Polymerpulver, entsprechend einer Metallocenaktivität von 247,0 kg Polymer/g Kat x h, erhalten.
Das Polymere enthielt 2,6 Gew.-% Hexeneinheiten, 2,5 Gew.-% Ethyleneinheiten und 94,9 Gew.-% Propyleneinheiten. Mittlere Blocklänge der Copolymeren $n_{PH}$= 1,0 $n_{PE}$= 1,02, VZ= 29,1 $cm^3$/g, $M_w$= 17400, $M_n$= 8050, $M_w/M_n$= 2,2; SD= 410 g/$dm^3$; SV= 760 mPa·s; Tropfpunkt 118 °C, Schmelzpunkt 106 °C, Kristallisationspunkt 68 °C, Schmelzenthalpie 70,4 J/g, Kristallisationsenthalpie - 52,6 J/g, Glastemperatur -22 °C.

**Beispiel 30**

Es wurde verfahren wie in Beispiel 29, statt 300 g (1)-Hexen wurden jedoch 500 g 1-Buten vorgelegt. Es wurden 1,92 kg Polymerpulver, entsprechend einer Metallocenaktivität von 225,9 kg Polymer/g Kat x h, erhalten.
Das Polymere enthielt 4,1 Gew.-% Buteneinheiten, 2,9 Gew.-% Ethyleneinheiten und 93,0 Gew.-% Propyleneinheiten. Die mittleren Blocklängen der Copolymeren betrugen $n_{PE}$= 1,04 und $n_{PB}$= 1,09. VZ= 30 $cm^3$/g; $M_w$= 19100, $M_n$= 9100, $M_w/M_n$= 2,1; SD= 370 g/$dm^3$, SV= 760 mPa·s; Tropfpunkt 120 °C, Schmelzpunkt 110 °C, Kristallisationspunkt 70 °C, Schmelzenthalpie 76,1 J/g, Kristallisationsenthalpie - 62,0 J/g, Glastemperatur -21 °C.

**Tabelle 1** Beispiele 1 - 16 (Polymerisationsdaten)

| Beispiel | g Ethylen gesamt | mg(mmol) Zirkonocen | Polymerisations-temperatur [°C] | Polymerisations-zeit [Minuten] | Produkt-menge [kg] | Metallocenaktivität [kg Polymer/gKatxh] | Gehalt Comonomerein-heiten [Gew.-%] |
|---|---|---|---|---|---|---|---|
| 1 | 12 | 12,0 (0,027) | 60 | 60 | 2,25 | 187,5 | 0,5 |
| 2 | 26 | 15,5 (0,035) | " | 45 | 2,95 | 253,8 | 0,7 |
| 3 | 45 | 11,8 (0,026) | " | 50 | 2,16 | 219,7 | 2,0 |
| 4 | 70 | 6,9 (0,015) | " | 60 | 2,82 | 408,7 | 2,4 |
| 5 | 80 | 8,6 (0,019) | " | " | 2,88 | 334,9 | 2,6 |
| 6 | 100 | 8,1 (0,018) | " | " | 1,73 | 213,6 | 5,6 |
| 7 | 110 | 13,4 (0,030) | " | " | 2,30 | 171,6 | 4,6 |
| 8 | 150 | 7,8 (0,017) | " | 75 | 1,97 | 202,1 | 7,3 |
| 9 | 160 | 6,8 (0,015) | " | " | 2,32 | 272,9 | 6,5 |
| 10 | 200 | 6,8 (0,015) | " | 60 | 1,61 | 236,8 | 12,0 |
| 11 | 300 | 7,8 (0,017) | " | " | 1,90 | 243,6 | 15,1 |
| 12 | 40 | 11,6 (0,026) | 50 | " | 2,21 | 190,5 | 1,7 |
| 13 | 80 | 12,1 (0,027) | " | 30 | 1,45 | 239,7 | 5,5 |
| 14 | 100 | 11,3 (0,025) | " | 60 | 1,60 | 141,6 | 6,2 |
| 15 | 125 | 14,1 (0,031) | " | 57 | 1,85 | 131,2 | 6,5 |
| 16 | 140 | 8,4 (0,019) | " | 60 | 1,50 | 178,6 | 8,8 |

**Tabelle 2** Beispiele 1 - 16 (Produkteigenschaften)

| Beispiel | VZ [$cm^3/g$] | $M_w$ [g/mol] | $M_n$ [g/mol] | $M_w/M_n$ | SD [$g/dm^3$] | SV [mPa·s] | Tropfpunkt [°C] | mittlere Blocklänge $\bar{n}_{PP}$ | $\bar{n}_{PE}$ | Schmelz-punkt [°C] | Kristalli-sationspunkt [°C] | Glastempe-ratur [°C] | Schmelz-enthalpie [J/g] | Kristall sations-enthalpie [J/g] |
|---|---|---|---|---|---|---|---|---|---|---|---|---|---|---|
| 1 | 22 | 12500 | 5850 | 2,1 | 420 | 300 | 146 | 130 | 1,0 | 137 | 100 | | 98,5 | -90,0 |
| 2 | 21 | 12300 | 5670 | 2,2 | 415 | 300 | 143 | 90 | 1,0 | 135 | 98 | | 93,2 | -91,7 |
| 3 | 25 | 13900 | 6590 | 2,1 | 525 | 500 | 134 | 28,7 | 1,01 | 124 | 86 | | 84,4 | -74,6 |
| 4 | 26 | 15350 | 7200 | 2,1 | 490 | 580 | 133 | 25,5 | 1,02 | 122 | 82 | -18 | 85,4 | -73,6 |
| 5 | 25 | 14750 | 6700 | 2,2 | 460 | 450 | 130 | 25,0 | 1,02 | 121 | 81 | -18 | 83,2 | -72,9 |
| 6 | 30 | 18700 | 7360 | 2,5 | 325 | 800 | 120 | 11,8 | 1,04 | 108 | 70 | -20 | 70,0 | -53,3 |
| 7 | 29 | 17750 | 8050 | 2,2 | 420 | 740 | 120 | 14,5 | 1,02 | 108 | 69 | -20 | 74,3 | -60,1 |
| 8 | 36 | 22600 | 8670 | 2,6 | 420 | 1640 | 118 | 9,4 | 1,10 | 93 | 56 | -25 | 53,7 | -38,5 |
| 9 | 34 | 21200 | 9800 | 2,2 | 470 | 1150 | 118 | 9,9 | 1,03 | 98 | 57 | -23 | 61,6 | -45,8 |
| 10 | 45 | 31750 | 15120 | 2,1 | 460 | 3450 | 101 | 4,9 | 1,05 | 88 | 46 | -26 | 39,2 | -29,1 |
| 11 | 51 | 43250 | 18800 | 2,3 | 450 | 5820 | 94 | 3,6 | 1,08 | 81 | 43 | -30 | 24,9 | -19,1 |
| 12 | 29 | 18350 | 7470 | 2,4 | 325 | 700 | 140 | 39,0 | 1,03 | 131 | 96 | - 9 | 97,5 | -32,3 |
| 13 | 35 | 21600 | 8960 | 2,4 | 370 | 1450 | 125 | 11,6 | 1,02 | 104 | 64 | -19 | 68,4 | -52,0 |
| 14 | 38 | 22850 | 10000 | 2,3 | 440 | 1570 | 128 | 10,5 | 1,02 | 100 | 60 | -21 | 64,4 | -43,0 |
| 15 | 38 | 22100 | 8740 | 2,5 | 400 | 1930 | 129 | 10,0 | 1,03 | 99 | 58 | -21 | 61,8 | -46,3 |
| 16 | 42 | 26100 | 12150 | 2,1 | 300 | 2800 | 118 | 7,3 | 1,02 | 86 | 48 | -25 | 56,0 | -34,3 |

**Tabelle 3** Beispiele 17 - 19 (Polymerisationsdaten)

| Beispiel | Wasserstoffmenge [$Ndm^3$] | [bar] | g Comonomer | mg(mmol) Zirkonocen | Polymerisationstemperatur [°C] | Polymerisationszeit- [Minuten] | Produktmenge [kg] | Metallocenaktivität [kg Polymer/g Katxh] | Gehalt Comonomereinheiten [Gew.-%] |
|---|---|---|---|---|---|---|---|---|---|
| 17 | 8 | 0,5 | 80 g Ethylen | 9,5 (0,021) | 60 | 60 | 3,57 | 375,8 | 2,1 |
| 18 | 16 | 1 | 80 g " | 11,2 (0,025) | 60 | 45 | 3,69 | 439,3 | 2,1 |
| 19 | 80 | 5 | 140 g " | 6,5 (0,015) | 60 | 60 | 2,80 | 430,8 | 4,8 |

**Tabelle 4** Beispiele 17 - 19 (Produkteigenschaften)

| Beispiel | VZ [$cm^3/g$] | $M_w$ [g/mol] | $M_n$ [g/mol] | $M_w/M_n$ | SD [$g/dm^3$] | SV [mPa·s] | Tropfpunkt [°C] | mittlere Blocklänge $\bar{n}_{PP}$ | mittlere Blocklänge $\bar{n}_{PE}$ | Schmelzpunkt [°C] | Kristallisationspunkt [°C] | Glastemperatur [°C] | Schmelzenthalpie [J/g] | Kristallisationsenthalpie [J/g] |
|---|---|---|---|---|---|---|---|---|---|---|---|---|---|---|
| 17 | 48,1 | 34750 | 15050 | 2,3 | 510 | 4590 | 133 | 29,6 | 1,01 | 121 | 86 | -14 | 79,2 | -68,4 |
| 18 | 37,0 | 23850 | 9930 | 2,4 | 500 | 1820 | 132 | 32,1 | 1,03 | 123 | 79 | -15 | 82,3 | -71,2 |
| 19 | 24,2 | 12600 | 5930 | 2,1 | 480 | 420 | 123 | 13,2 | 1,05 | 109 | 71 | -21 | 74,9 | -53,2 |

**Tabelle 5** Beispiele 20 - 24 (Polymerisationsdaten)

| Beispiel | mg(mmol) Metallocenverbindung | g Comonomer | Polymerisations-temperatur [°C] | Polymerisations-zeit [Minuten] | Produkt-menge [kg] | Metalloceneaktivität [kg Polmyer/g Katxh] | Gehalt Comonomer [Gew.-%] |
|---|---|---|---|---|---|---|---|
| 20 | 8,3 (0,020) Ethylenbisindenylzirkondichlorid | 100 g Ethylen | 60 | 60 | 2,48 | 298,8 | 3,7 |
| 21 | 25,6 (0,045) Diphenylsilylbisindenylzirkondichlorid | 110 g Ethylen | 60 | 60 | 2,06 | 80,5 | 5,1 |
| 22 | 8,1 (0,016) Dimethylgermylbisindenylzirkondichlorid | 90 g Ethylen | 60 | 53 | 3,02 | 422,1 | 2,9 |
| 23 | 36,9 (0,073) Ethylenbisindenylhafniumdichlorid | 110 g Ethylen | 60 | 240 | 2,35 | 15,9 | 4,4 |
| 24 | 24,0 (0,046)(Vinyl)(Phenyl)-silylbisindenylzirkondichlorid | 110 g Ethylen | 60 | 60 | 2,33 | 97,1 | 4,4 |

**Tabelle 6** Beispiele 20 - 24 (Produkteigenschaften)

| Beispiel | VZ [$cm^3/g$] | $M_w$ [g/mol] | $M_n$ [g/mol] | $M_w/M_n$ | SD [$g/dm^3$] | SV [mPa·s] | Tropfpunkt [°C] | mittlere Blocklänge $\bar{n}_{PP}$ | $\bar{n}_{PE}$ | Schmelz-punkt [°C] | Kristalli-sationspunkt [°C] | Glastempe-ratur [°C] | Schmelz-enthalpie [J/g] | Kristalli-sations-enthalpie [J/g] |
|---|---|---|---|---|---|---|---|---|---|---|---|---|---|---|
| 20 | 19,1 | 10950 | 5065 | 2,2 | 460 | 220 | 124 | 17,2 | 1,02 | 109 | 73 | -22 | 74,0 | -56,2 |
| 21 | 29,2 | 18650 | 8550 | 2,2 | 470 | 860 | 116 | 12,5 | 1,02 | 103 | 63 | -22 | 64,1 | -49,7 |
| 22 | 22,4 | 13350 | 6600 | 2,0 | 490 | 350 | 133 | 20,7 | 1,04 | 119 | 81 | -20 | 83,7 | -71,0 |
| 23 | 19,1 | 10750 | 3640 | 3,0 (bimodal) | 450 | 200 | 123 | 14,3 | 1,03 | 120 | 84 | -30 | 68,3 | -51,8 |
| 24 | 29,3 | 16900 | 7350 | 2,3 | 460 | 740 | 124 | 15,6 | 1,02 | 107 | 68 | -24 | 70,2 | -56,1 |

**Tabelle 7** Beispiele 25 - 27 (Polymerisationsdaten)

| Beispiel | g Comonomer | mg(mmol) Zirkonocen | Polymerisations-temperatur [°C] | Polymeri-sationszeit [min] | Produktmenge [kg] | Metallocen-aktivität [kg Polymer/g katxh] | Gehalt Comonomereinheiten [Gew.-%] |
|---|---|---|---|---|---|---|---|
| 25 | 200 g 1-Hexen | 8,3 (0,019) | 60 | 60 | 1,32 | 159,0 | 2,0 |
| 26 | 1000 g 1-Buten | 8,2 (0,018) | " | 90 | 1,61 | 130,9 | 10,4 |
| 27 | 500 g 4-Methyl-1-penten | 9,0 (0,020) | " | 60 | 1,37 | 152,2 | 3,6 |

**Tabelle 8** Beispiele 25 - 27 (Produkteigenschaften)

| Beispiel | VZ [$cm^3/g$] | $M_w$ [g/mol] | $M_n$ [g/mol] | $M_w/M_n$ | SD [g/mol] | SV [mPa·s] | Tropfpunkt [°C] | mittlere Blocklänge $n_{PP}$ | $n_{PH}$ | $n_{PB}$ | $n_{PMP}$ | Schmelz-punkt [°C] | Kristalli-sationspunkt [°C] | Schmelz-enthalpie [J/g] | Kristalli-sations-enthalpie [J/g] |
|---|---|---|---|---|---|---|---|---|---|---|---|---|---|---|---|
| 25 | 20 | 10200 | 4800 | 2,1 | 380 | | | 100 | 1,0 | - | - | 127 | 90 | 91,4 | -78,0 |
| 26 | 18 | 9870 | 4700 | 2,1 | 390 | | | 11,5 | - | 1,10 | - | 115 | 80 | 85,1 | -74,1 |
| 27 | 17 | 7650 | 3900 | 2,0 | 400 | | | 53,5 | - | - | 1,05 | 115 | 76 | 79,5 | -68,9 |

## Patentansprüche

### Patentansprüche für folgende Vertragsstaaten : BE, DE, FR, GB, IT, NL

1. Polypropylenwachs, bestehend aus 80 bis 99,75 Gew.-%, bezogen auf das Gesamtpolymer, Propyleneinheiten und 0,25 bis 20 Gew.-%, bezogen auf das Gesamtpolymer, aus Einheiten, die sich von Ethylen oder einem Olefin mit mindestens 4 C-Atomen der Formel $R^{15}$-CH=CH-$R^{16}$ ableiten, worin $R^{15}$ und $R^{16}$ gleich oder verschieden sind und ein Wasserstoffatom oder einen Alkylrest mit 1 bis 28 C-Atomen bedeuten oder $R^{15}$ und $R^{16}$ mit den sie verbindenden C-Atomen einen Ring mit 4 bis 28 C-Atomen bilden, mit einer Molmasse $M_w$ von 1000 bis 50000 g/mol, einer Polydispersität $M_w/M_n$ von 1,8 bis 5,0 einer Viskositätszahl von 2 bis 60 $cm^3/g$, einem Schmelzpunkt von 50 bis 150 °C, einer Schmelzenthalpie $\Delta H$ kleiner 100 J/g, einem Tropfpunkt von 60 bis 160 °C, einer Schmelzviskosität bei 170 °C von 100 bis 20000 mPa·s und einer regelmäßigen Verteilung der Comonomereinheiten in der Polymerkette, wobei die mittlere Copolymer-Blocklänge n kleiner als 1,25 ist.

2. Verfahren zur Herstellung des Polypropylenwachses gemäß Anspruch 1 durch Polymerisation von 70 bis 99,9 Gew.-%, bezogen auf die Gesamtmenge der Monomeren, Propylen und 0,1 bis 30 Gew.-%, bezogen auf die Gesamtmenge der Monomeren, mindestens eines Vertreters der Gruppe Ethylen und Olefine mit mindestens 4 C-Atomen der Formel $R^{15}$-CH=CH-$R^{16}$, worin $R^{15}$ und $R^{16}$ die in Anspruch 1 genannte Bedeutung haben, bei einer Temperatur von -60 °C bis 100 °C, bei einem Druck von 0,5 bis 120 bar, in Lösung, in Suspension oder in der Gasphase, in Gegenwart von Wasserstoff als Molmassenregler und eines Katalysators, welcher aus einem Metallocen und einem Aluminoxan besteht, dadurch gekennzeichnet, daß der Wasserstoffpartialdruck 0,05 bis 50 bar und das Molverhältnis Olefin zu Wasserstoff 3 bis 3000:1 beträgt und daß das Metallocen eine Verbindung der Formel I

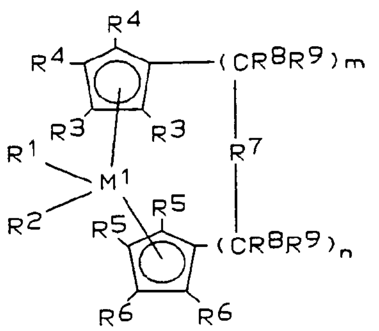

(I)

ist, worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$,$R^4$, $R^5$ und $R^6$ gleich oder verschieden sind und ein Wasserstoffatom, ein Halogenatom, eine $C_1$-$C_{10}$-Alkylgruppe, eine $C_6$-$C_{10}$-Arylgruppe, eine $C_1$-$C_{10}$-Alkoxygruppe, einen -$NR^{10}_2$-, -$SR^{10}$-, -$OSiR^{10}_3$, -$SiR^{10}_3$-, oder -$PR^{10}_2$-Rest bedeuten, worin $R^{10}$ eine $C_1$-$C_{10}$-Alkylgruppe, eine $C_6$-$C_{10}$-Arylgruppe oder im Falle Si oder P enthaltender Reste auch ein Halogenatom ist, oder je zwei benachbarte Reste $R^3$, $R^4$, $R^5$ oder $R^6$ mit den sie verbindenden C-Atomen einen Ring bilden,

$R^7$

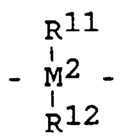, 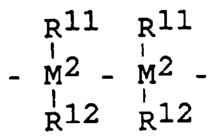, 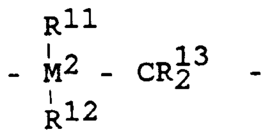, 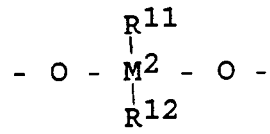

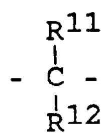, 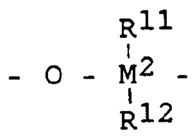, 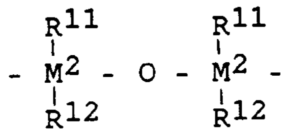,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{30}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben,

m und n gleich oder verschieden und null, 1 oder 2 sind, wobei m plus n null, 1 oder 2 ist,

und das Aluminoxan eine Verbindung der Formel (II)

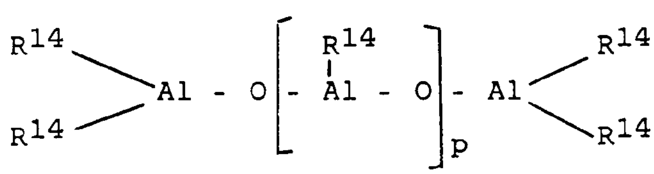

(II)

für den linearen Typ und/oder der Formel (III)

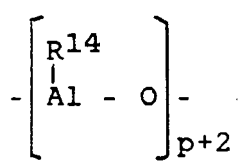

(III)

für den cyclischen Typ ist, wobei in den Formeln (II) und (III) $R^{14}$ eine $C_1$-$C_6$-Alkylgruppe bedeutet und p eine ganze Zahl von 2 bis 50 ist, bedeutet.

**Patentanspruch für folgenden Vertragsstaat : ES**

1. Verfahren zur Herstellung eines Polypropylenwachses durch Polymerisation von 70 bis 99,9 Gew.-%, bezogen auf die Gesamtmenge der Monomeren, Propylen und 0,1 bis 30 Gew.-%, bezogen auf die Gesamtmenge der Monomeren, mindestens eines Vertreters der Gruppe Ethylen und Olefine mit mindestens 4 C-Atomen der Formel $R^{15}$-CH=CH-$R^{16}$, worin $R^{15}$ und $R^{16}$ die in Anspruch 1 genannte Bedeutung haben, bei einer Temperatur von -60 °C bis 100 °C, bei einem Druck von 0,5 bis 120 bar, in Lösung, in Suspension oder in der Gasphase, in Gegenwart von Wasserstoff als Molmassenregler und eines Katalysators, welcher aus einem Metallocen und einem Aluminoxan besteht, dadurch gekennzeichnet, daß der Wasserstoffpartialdruck 0,05 bis 50 bar und das Molverhältnis Olefin zu Wasserstoff 3 bis 3000:1 beträgt und daß das Metallocen eine Verbindung der Formel I

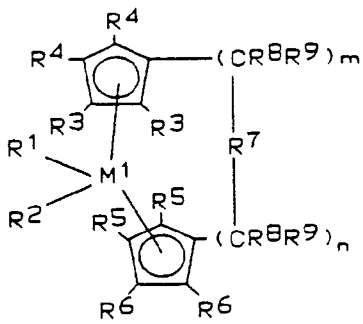

(I)

ist, worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$,$R^4$, $R^5$ und $R^6$ gleich oder verschieden sind und ein Wasserstoffatom, ein Halogenatom, eine $C_1$-$C_{10}$-Alkylgruppe, eine $C_6$-$C_{10}$-Arylgruppe, eine $C_1$-$C_{10}$-Alkoxygruppe, einen -$NR^{10}_2$-, -$SR^{10}$-, -$OSiR^{10}_3$, $SiR^{10}_3$-, oder -$PR^{10}_2$- Rest bedeuten, worin $R^{10}$ eine $C_1$-$C_{10}$-Alkylgruppe eine $C_6$-$C_{10}$-Arylgruppe oder im Falle Si oder P enthaltender Reste auch ein Halogenatom ist, oder je zwei benachbarte Reste $R^3$, $R^4$, $R^5$ oder $R^6$ mit den sie verbindenden C-Atomen einen Ring bilden,

$R^7$

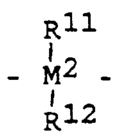 , 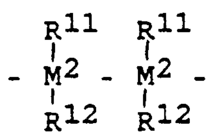 , 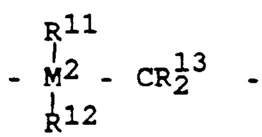 , 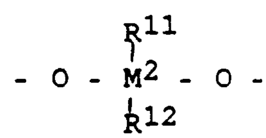

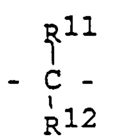 , 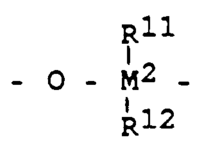 , 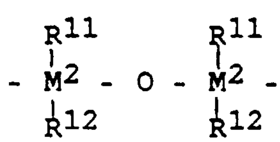 ,

=$BR^{11}$, =$AlR^{11}$, -Ge-, -Sn-, -O-, -S-, =SO, =$SO_2$, =$NR^{11}$, =CO, =$PR^{11}$ oder =P(O)$R^{11}$ ist,

wobei

$R^{11}$, $R^{12}$ und $R^{13}$ gleich oder verschieden sind und ein Wasserstoffatom, ein Halogenatom, eine $C_1$-$C_{30}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben,

m und n gleich oder verschieden und null, 1 oder 2 sind, wobei m plus n null, 1 oder 2 ist,

und das Aluminoxan eine Verbindung der Formel (II)

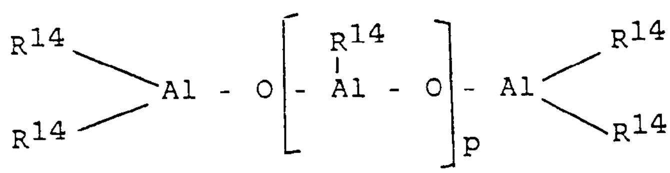

(II)

für den linearen Typ und/oder der Formel (III)

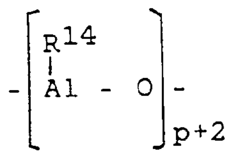

(III)

für den cyclischen Typ ist, wobei in den Formeln (II) und (III) $R^{14}$ eine $C_1$-$C_6$-Alkylgruppe bedeutet und p eine ganze Zahl von 2 bis 50 ist, bedeutet.

## Claims

### Claims for the following Contracting States : BE, DE, FR, GB, IT, NL

1. A polypropylene wax composed of 80 to 99.75% by weight, based on the total polymer, of propylene units and 0.25 to 20% by weight, based on the total polymer, of units which are derived from ethylene or an olefin containing not less than 4 carbon atoms of the formula $R^{15}$-CH=CH-$R^{16}$, in which $R^{15}$ and $R^{16}$ are identical or different and are a hydrogen atom or an alkyl radical containing 1 to 28 carbon atoms or $R^{15}$ and $R^{16}$ form a ring containing 4 to 28 carbon atoms with the carbon atoms joining them, which polypropylene wax has a molar mass $M_w$ of 1,000 to 50,000 g/mol, a polydispersity $M_w/M_n$ of 1.8 to 5.0, a viscosity number of 2 to 60 $cm^3/g$, a melting point of 50 to 150°C, an enthalpy of fusion $\Delta H$ of less than 100 J/g, a dropping point of 60 to 160°C, a melt viscosity at 170°C of 100 to 20,000 mPa.s and a regular distribution of the comonomer units in the polymer chain, the mean block length copolymer n being less than 1.25.

2. A process for the production of the polypropylene wax as claimed in claim 1 by polymerizing 70 to 99.9 % by weight, based on the total amount of the monomers, of propylene and 0.1 to 30% by weight, based on the total amount of the monomers, of not less than one representative of the group comprising ethylene and olefins containing not less than 4 carbon atoms of the formula $R^{15}$-CH=CH-$R^{16}$, in which $R^{15}$ and $R^{16}$ have the meaning stated in claim 1, at a temperature of -60°C to 100°C, at a pressure of 0.5 to 120 bar, in solution, in suspension or in the gas phase, in the presence of hydrogen as a molar mass regulator and of a catalyst which is composed of a metallocene and an aluminoxane, wherein the hydrogen partial pressure is 0.05 to 50 bar and the molar ratio of olefin to hydrogen is 3 to 3,000:1, and wherein the metallocene is a compound of the formula I:

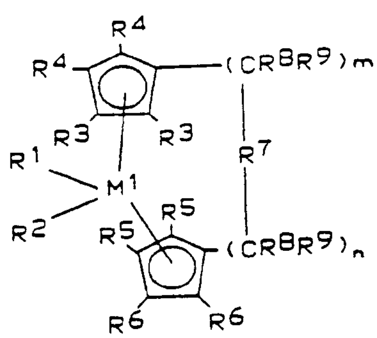

(I)

in which

$M^1$ is a metal of the group IVb, Vb or VIb of the periodic system,

$R^1$ and $R^2$ are identical or different and are a hydrogen atom, a ($C_1$-$C_{10}$)alkyl group, a ($C_1$-$C_{10}$)alkoxy group, a ($C_6$-$C_{10}$)aryl group, a ($C_6$-$C_{10}$)aryloxy group, a ($C_2$-$C_{10}$)alkenyl group, a ($C_7$-$C_{40}$)arylalkyl group, a ($C_7$-$C_{40}$)alkylaryl group, a ($C_8$-$C_{40}$)arylalkenyl group or a halogen atom,

$R^3$, $R^4$, $R^5$ and $R^6$ are identical or different and are a hydrogen atom, a halogen atom, a ($C_1$-$C_{10}$)alkyl group, a ($C_6$-$C_{10}$)aryl group, a ($C_1$-$C_{10}$) alkoxy group, or an -$NR^{10}_2$-; -$SR^{10}$-, -$OSiR^{10}_3$, -$SiR^{10}_3$-, or-$PR^{10}_2$- radical, in which $R^{10}$ is a ($C_1$-$C_{10}$)alkyl group, a ($C_6$-$C_{10}$)aryl group or alternatively, in the case of radicals containing silicon or phosphorus, a halogen atom, or two adjacent radicals $R^3$, $R^4$, $R^5$ or $R^6$ each form a ring with the carbon atoms joining them,

$R^7$ is

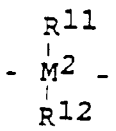 , 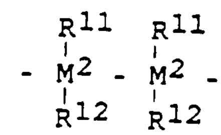 , 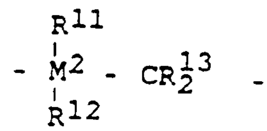 , 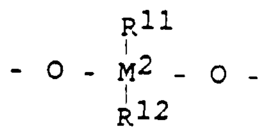

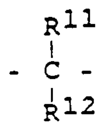 , 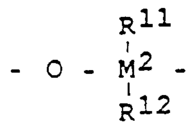 , 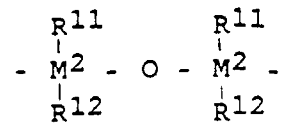 ,

$=BR^{11}$, $=AlR^{11}$, -Ge-, -Sn-. -O-, -S- =SO, $=SO_2$ $=NR^{11}$, =CO, $=PR^{11}$ oder $=P(O)R^{11}$ ist,

where

$R^{11}$, $R^{12}$ and $R^{13}$ are identical or different and are a hydrogen atom, a halogen atom, a $(C_1$-$C_{30})$alkyl group, a $(C_1$-$C_{10})$fluoroalkyl group, a $(C_6$-$C_{10})$aryl group, a $(C_6$-$C_{10})$fluoroaryl group, a $(C_1$-$C_{10})$alkoxy group, a $(C_2$-$C_{10})$alkenyl group, a $(C_7$-$C_{40})$arylalkyl group, a $(C_8$-$C_{40})$arylalkenyl group, a $(C_7$-$C_{40})$alkylaryl group, or $R^{11}$ and $R^{12}$ or $R^{11}$ and $R^{13}$ in each case form a ring with the atoms joining them,

$M^2$ is silicon, germanium or tin,

$R^8$ and $R^9$ are identical or different and have the meaning stated for $R^{11}$,

m and n are identical or different and are zero, 1 or 2, m plus n being zero, 1 or 2, and the alumoxane is a compound of the formula (II):

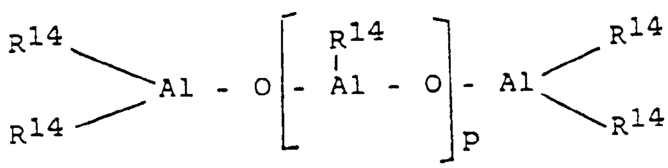 (II)

for the linear type and/or of the formula (III)

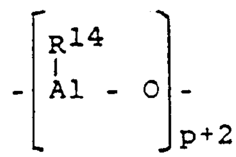 (III)

for the cyclic type, $R^{14}$ being a $(C_1$-$C_6)$alkyl group in the formulae (II) and (III) and p being an integer from 2 to 50.

**Claim for the following Contracting State : ES**

1. A process for the production of a polypropylene wax by polymerizing 70 to 99.9% by weight, based on the total amount of the monomers, of propylene and 0.1 to 30% by weight, based on the total amount of the monomers, of not less than one representative of the group comprising ethylene and olefins containing not less than 4 carbon atoms of the formula $R^{15}$-CH=CH-$R^{16}$, in which $R^{15}$ and $R^{16}$ have the meaning stated in claim 1, at a temperature of -60°C to 100°C, at a pressure of 0.5 to 120 bar, in solution, in suspension or in the gas phase, in the presence of hydrogen as a molar mass regulator and of a catalyst which is composed of a metallocene and an aluminoxane, wherein the hydrogen partial pressure is 0.05 to 50 bar and the molar ratio of olefin to hydrogen is 3 to 3,000:1, and wherein the metallocene is a compound of the formula I

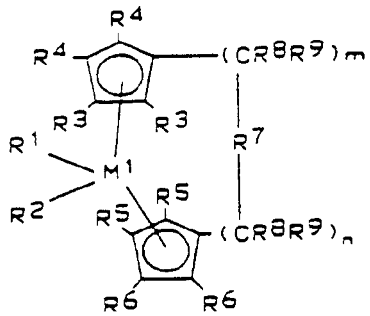

(I)

in which

$M^1$ is a metal of the group IVb, Vb or VIb of the periodic system,

$R^1$ and $R^2$ are identical or different and are a hydrogen atom, a $(C_1\text{-}C_{10})$alkyl group, a $(C_1\text{-}C_{10})$alkoxy group, a $(C_6\text{-}C_{10})$aryl group, a $(C_6\text{-}C_{10})$aryloxy group, a $(C_2\text{-}C_{10})$alkenyl group, a $(C_7\text{-}C_{40})$arylalkyl group, a $(C_7\text{-}C_{40})$alkylaryl group, a $(C_8\text{-}C_{40})$arylalkenyl group or a halogen atom,

$R^3$, $R^4$, $R^5$ and $R^6$ are identical or different and are a hydrogen atom, a halogen atom, a $(C_1\text{-}C_{10})$alkyl group, a $(C_6\text{-}C_{10})$aryl group, a $(C_1\text{-}C_{10})$alkoxy group, or an $-NR^{10}_2-$, $-SR^{10}-$, $-OSiR^{10}_3$, $-SiR^{10}_3-$, or $-PR^{10}_2$-radical, in which $R^{10}$ is a $(C_1\text{-}C_{10})$alkyl group, a $(C_6\text{-}C_{10})$aryl group or alternatively, in the case of radicals containing silicon or phosphorus, a halogen atom, or two adjacent radicals $R^3$, $R^4$, $R^5$ or $R^6$ each form a ring with the carbon atoms joining them,

$R^7$ is

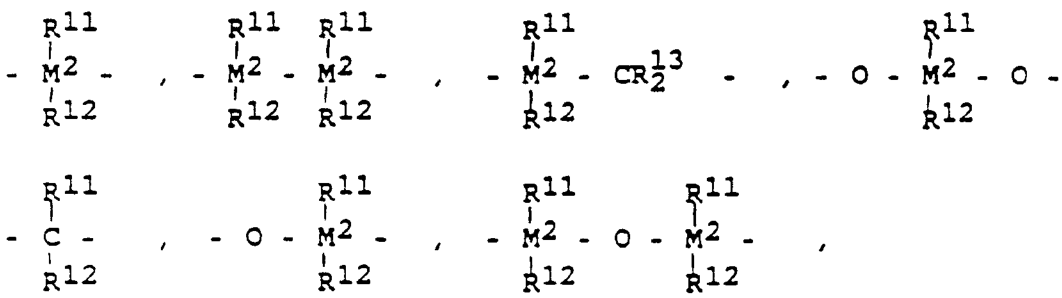

$=BR^{11}$, $=AlR^{11}$, -Ge-, -Sn-. -O-, -S- =SO, $=SO_2$, $=NR^{11}$, =CO, $=PR^{11}$ oder $=P(O)R^{11}$ ist,

where

$R^{11}$, $R^{12}$ and $R^{13}$ are identical or different and are a hydrogen atom, a halogen atom, a $(C_1\text{-}C_{30})$alkyl group, a $(C_1\text{-}C_{10})$fluoroalkyl group, a $(C_6\text{-}C_{10})$aryl group, a $(C_6\text{-}C_{10})$fluoroaryl group, a $(C_1\text{-}C_{10})$alkoxy group, a $(C_2\text{-}C_{10})$alkenyl group, a $(C_7\text{-}C_{40})$arylalkyl group, a $(C_8\text{-}C_{40})$arylalkenyl group, a $(C_7\text{-}C_{40})$alkylaryl group, or $R^{11}$ and $R^{12}$ or $R^{11}$ and $R^{13}$ in each case form a ring with the atoms joining them,

$M_2$ is silicon, germanium or tin,

$R^8$ and $R^9$ are identical or different and have the meaning stated for $R^{11}$,

m and n are identical or different and are zero, 1 or 2, m plus n being zero, 1 or 2, and the alumoxane is a compound of the formula (II):

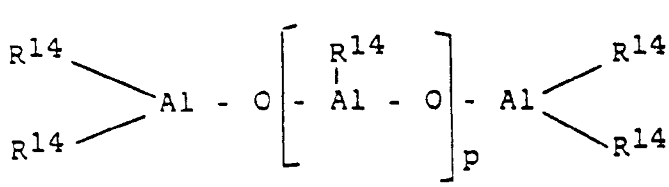

(II)

for the linear type and/or of the formula (III)

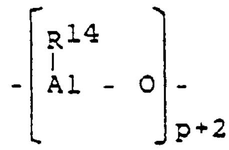

(III)

for the cyclic type, $R^{14}$ being a ($C_1$-$C_6$)alkyl group in the formulae (II) and (III) and p being an integer from 2 to 50.

## Revendications

**Revendications pour les Etats contractants suivants : BE, DE, FR, GB, IT, NL**

**1.** Cire de polypropylène, consistant en 80 à 99,75 % en poids, par rapport au polymère total, de motifs propylène et en 0,25 à 20 % en poids, par rapport au polymère total, de motifs qui dérivent de l'éthylène ou d'une oléfine comportant au moins 4 atomes de carbone et répondant à la formule $R^{15}$-CH=CH-$R^{16}$, dans laquelle $R^{15}$ et $R^{16}$ sont identiques ou différents et représentent chacun un atome d'hydrogène ou un reste alkyle ayant 1 à 28 atomes de carbone, ou bien $R^{15}$ et $R^{16}$ forment, avec les atomes du carbone auxquels ils sont reliés, un noyau comportant 4 à 28 atomes de carbone, cette cire ayant une masse molaire $M_P$ de 1000 à 50 000 g/mole, une polydispersité $M_p/M_n$ de 1,8 à 5,0, un indice de viscosité de 2 à 60 $cm^3/g$, un point de fusion de 50 à 150°C, une enthalpie de fusion delta H inférieure à 100 J/g, un point de goutte de 60 à 160 °C, une viscosité en masse fondue à 170°C de 100 à 20000 MPa.s et une répartition régulière des motifs des comonomères dans la chaîne du polymère, la longueur moyenne des blocs ou longues séquences de copolymère, n, étant inférieure à 1,25.

**2.** Procédé de préparation d'une cire de polyéthylène selon la revendication 1, par polymérisation de 70 à 99,9 % en poids, par rapport à la quantité totale des monomères, de propylène et de 0,1 à 30 % en poids, par rapport à la quantité totale des monomères d'au moins un représentant du groupe formé par l'éthylène et des oléfines comportant au moins 4 atomes de carbone et répondant à la formule $R^{15}$-CH=CH-$R^{16}$ (dans laquelle $R^{15}$ et $R^{16}$ ont le sens indiqué à la revendication 1) à une température de -60°C à + 100°C, sous une pression de 0,5 à 120 bars, en solution, en suspension ou en phase gazeuse, en présence d'hydrogène comme régulateur de masse molaire et en présence d'un catalyseur, qui consiste en un métallocène et en un aluminoxane, procédé caractérisé en ce que la pression partielle de l'hydrogène vaut 0,05 à 50 bars et le rapport molaire entre l'oléfine et l'hydrogène est de 3 à 3000:1, et en ce que le métallocène est un composé de formule 1

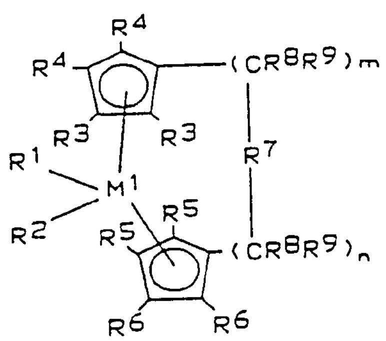

( I )

dans laquelle

$M^1$ représente un métal du groupe IVb, Vb ou VIb du système ou tableau périodique,

$R^1$ et $R^2$ sont identiques ou différents et représentent chacun un atome d'hydrogène, un groupe alkyle en $C_1$ à $C_{10}$, un groupe alcoxy en $C_1$ à $C_{10}$, un groupe aryle en $C_6$ à $C_{10}$, un groupe aryloxy en $C_6$ à $C_{10}$, un groupe alcényle en $C_2$ à $C_{10}$, un groupe arylalkyle en $C_7$ à $C_{40}$, un groupe alkylaryle en $C_7$ à $C_{40}$, un groupe arylalcényle en $C_8$ à $C_{40}$ ou un atome d'halogène,

$R^3$, $R^4$, $R^5$ et $R^6$ sont identiques ou différents et représentent chacun un atome d'hydrogène, un atone d'halogène, un groupe alkyle en $C_1$ à $C_{10}$, un groupe aryle en $C_6$ à $C_{10}$, un groupe alcoxy en $C_1$ à $C_{10}$, un reste $-NR^{10}_2$, $-SR^{10}$, $-OSiR^{10}_3$, $-SiR^{10}_3$,

ou $-PR^{10}_2$, formules dans lesquelles $R^{10}$ représente un groupe alkyle en $C_1$ à $C_{10}$, un groupe aryle en $C_6$ à $C_{10}$, ou dans le cas des restes contenant Si ou P, également un atome d'halogène, ou bien deux restes voisins $R^3$, $R^4$, $R^5$ ou $R^6$ forment, avec les atomes de carbone qui les relient, un noyau,

$R^7$ représente

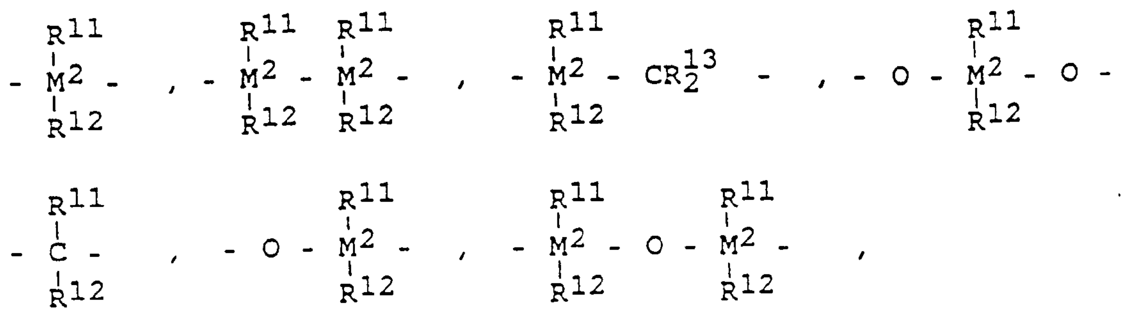

$=BR^{11}$, $=AlR^{11}$, -Ge-, -Sn-. -O-, -S- =SO, $=SO_2$ $=NR^{11}$, =CO, $=PR^{11}$ ou $=P(O)R^{11}$

formules dans lesquelles

$R^{11}$, $R^{12}$ et $R^{13}$ sont identiques ou différents et représentent chacun un atome d'hydrogène, un atome d'halogène, un groupe alkyle en $C_1$ à $C_{30}$, un groupe fluoroalkyle en $C_1$ à $C_{10}$, un groupe aryle en $C_6$ à $C_{10}$, un groupe fluoro-aryle en $C_6$ à $C_{10}$,un groupe alcoxy en $C_1$ à $C_{10}$, un groupe alcényle en $C_2$ à $C_{10}$, un groupe aryle alkyle en $C_7$ à $C_{40}$, un groupe arylalcényle en $C_8$ à $C_{40}$, un groupe alkylaryle en $C_7$ à $C_{40}$, ou bien $R^{11}$ et $R^{12}$, ou bien $R_{11}$ et $R_{13}$ forment, chaque fois avec les atomes qui les relient,un noyau,

$M^2$ représente un atome de silicium, de germanium ou d'étain,

$R^8$ et $R^9$ sont identiques ou différents et ont le sens indiqué pour $R^{11}$,

m et n sont identiques ou différents et valent chacun 0, 1 ou 2, la somme (m+n) valant 0, 1 ou 2, et l'aluminoxane est un composé de formule (II)

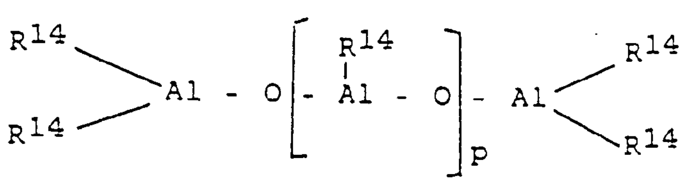

(II)

pour le type linéaire et/ou de formule (III)

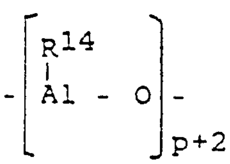

(III)

pour le type cyclique, et, dans les formules (II) et (III), $R^{14}$ représente un groupe alkyle en $C_1$ à $C_6$ et p est un nombre entier valant 2 à 50.

**Revendication pour l'Etat contractant suivant : ES**

1. Procédé de préparation d'une cire de polypropylène par polymérisation de 70 à 99,9 % en poids par rapport à la quantité totale des monomères, de propylène et de 0,1 à 30 % en poids, par rapport à la quantité totale des monomères, d'au moins un représentant du groupe formé par l'éthylène et des oléfines ayant au minimum 4 atomes de carbone et répondant à la formule $R^{15}-CH=CH-R^{16}$ (dans laquelle $R^{15}$ et $R^{16}$ sont identiques ou différents et représentent chacun un atome d'hydrogène ou un reste alkyle ayant 1 à 28 atomes de carbone, ou bien $R^{15}$ et $R^{16}$ forment, avec les atomes de C qui les relient, un noyau comportant 4 à 28 atomes de carbone), à une température de -60°C à + 100°C, sous une pression de 0,5 à 120 bars, en solution, en suspension ou en phase gazeuse, en présence d'hydrogène comme régulateur de

masse molaire et en présence d'un catalyseur, qui consiste en un métallocène et en un aluminoxane, procédé caractérisé en ce que la pression partielle de l'hydrogène vaut 0,05 à 50 bars et le rapport molaire entre l'oléfine et l'hydrogène est de 3 à 3000:1, et en ce que le métallocène est un composé de formule 1

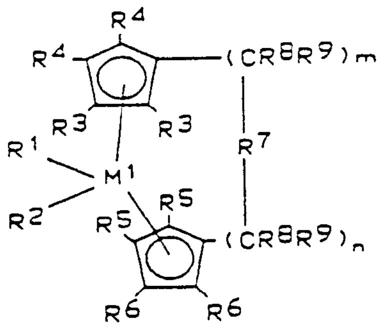

(I)

dans laquelle

$M^1$ représente un métal du groupe IVb, Vb ou VIb du système ou tableau périodique,

$R^1$ et $R^2$ sont identiques ou différents et représentent chacun un atome d'hydrogène, un groupe alkyle en $C_6$ à $C_{10}$, un groupe alcoxy en $C_1$ à $C_{10}$, un groupe aryle en $C_6$ à $C_{10}$, un groupe aryloxy en $C_6$ à $C_{10}$, un groupe alcényle en $C_2$ à $C_{10}$, un groupe arylalkyle en $C_7$ à $C_{40}$, un groupe alkylaryle en $C_7$ à $C_{40}$, un groupe arylalcényle en $C_8$ à $C_{40}$ ou un atome d'halogène,

$R^3$, $R^4$, $R^5$ et $R^6$ sont identiques ou différents et représentent chacun un atome d'hydrogène, un atome d'halogène, un groupe alkyle en $C^1$ à $C_{10,}$ un groupe aryle en $C_6$ à $C_{10}$, un groupe alcoxy en $C_1$ à $C_{10}$, un reste $-NR^{10}_2-$, $-SR^{10}-$, $-OSiR^{10}_3-$ $-SiR^{10}_3-$ ou $-PR^{10}_2-$ formules dans lesquelles $R^{10}$ représente un groupe alkyle en $C_1$ à $C_{10}$, un groupe aryle en $C_6$ à $C_{10}$, ou dans le cas des restes contenant Si ou P, également un atome d'halogène, ou bien deux restes voisins $R^3$, $R^4$, $R^5$ ou $R^6$ forment, avec les atomes de carbone qui les relie, un noyau, $R^7$ représente

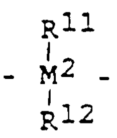 , 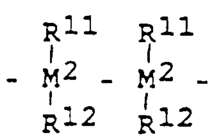 , 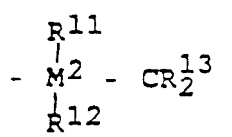 , 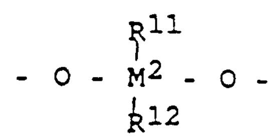

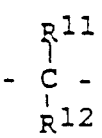 , 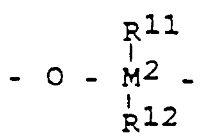 , 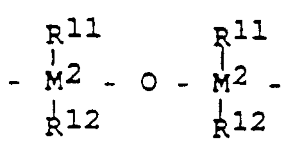 ,

$=BR^{11}$, $=AlR^{11}$, -Ge-, -Sn.-, -O-, -S-, =SO, $=SO_2$, $=NR^{11}$, =CO, $=PR^{11}$ ou $=P(O)R^{11}$

formules dans lesquelles

$R^{11}$, $R^{12}$ et $R^{13}$ sont identiques ou différents et représentent chacun un atome d'hydrogène, un atome d'halogène, un groupe alkyle en $C_1$ à $C_{30}$, un groupe fluoroalkyle en $C_1$ à $C_{10}$, un groupe aryle en $C_6$ à $C_{10}$, un groupe fluoro-aryle en $C_6$ à $C_{10}$, un groupe alcoxy en $C_1$ à $C_{10}$, un groupe alcényle en $C_2$ à $C_{10}$, un groupe arylalkyle en $C_7$- à $C_{40}$, un groupe arylalcényle en $C_8$ à $C_{40}$, un groupe alkylaryle en $C_7$ à $C_{40}$, ou bien $R^{11}$ et $R^{12}$, ou bien $R^{11}$ et $R^{13}$ forment, chaque fois avec les atomes qui les relient, un noyau,

$M^2$ représente un atome de silicium, de germanium ou d'étain,

$R^8$ et $R^9$ sont identiques ou différents et ont le sens indiqué pour $R^{11}$,

m et n sont identiques ou différents et valent chacun 0, 1 ou 2, la somme (m+n) valant 0, 1 ou 2, et l'aluminoxane est un composé de formule (II)

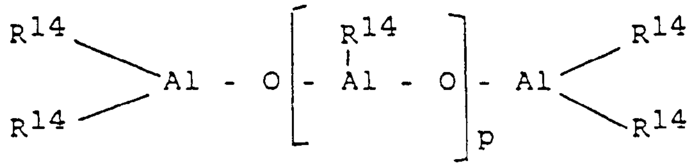

(II)

pour le type linéaire et/ou de formule (III)

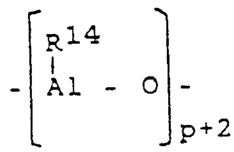

(III)

pour le type cyclique, et, dans les formules (II) et (III), $R^{14}$ représente un groupe alkyle en $C_1$ à $C_6$ et p est un nombre entier valant 2 à 50.